# FASCICULE DE BREVET EUROPEEN

(11) **EP 2 494 245 B1**
(45) Date de publication et mention de la délivrance du brevet: **22.01.2014**
(21) Numéro de dépôt: 10788357.1
(22) Date de dépôt: 29.10.2010
(51) Int. Cl.: F16L 3/12, H02G 3/32

(54) **COLLIER DE FIXATION SANS VIS A MONTAGE RAPIDE**
SCHNELL ZU MONTIERENDE SCHRAUBENLOSE ANBRINGUNGSKLAMMER
QUICK-MOUNTING SCREWLESS ATTACHMENT CLAMP

(30) Priorité: 29.10.2009 FR 0905203
(43) Date de publication de la demande: 05.09.2012
(73) Titulaire: AEML, 45130 Meung sur Loire (FR)
(72) Inventeur: KRZYWDZIAK, Alain, F-45100 Orleans (FR)
(74) Mandataire: Debay, Yves
(86) Numéro de dépôt international: PCT/FR2010/000710
(87) Numéro de publication internationale: WO 2011/051576

(56) Documents cités:
- EP-A1- 1 813 849
- EP-B1- 1 397 598
- WO-A1-98/51953
- DE-U- 1 998 338
- FR-A1- 2 379 008
- FR-A1- 2 907 875
- NL-C2- 1 015 775

## Description

La présente invention concerne un collier de fixation destiné à fixer des objets, de préférence uni-axiaux allongés quelconques, par exemple, des tuyaux, des câbles, des fils, sur un support quelconque, comme par exemple un mur, une planche, etc.

L'invention concerne plus particulièrement un collier de fixation pour tuyauterie ou analogue, sans vis et à montage rapide.

Les colliers de fixation sont couramment utilisés dans les installations électriques et de plomberie pour fixer sur un support comme par exemple un mur, des objets uni-axiaux allongés tels que, par exemple, un tuyau, un câble, un fil etc.

La demande de brevet EP 1 813 849 présente un collier de fixation à attache rapide. Ce collier est constitué de deux éléments distincts formant chacun un demi-collier dont l'un est fixe et l'autre forme une bride mobile. Chaque demi-collier se prolonge vers l'extérieur de chaque côté par une patte. Les pattes de ces deux demi-colliers coopèrent deux à deux et forment une articulation et un système de fixation sans vis pour verrouiller le collier.

Cependant ce collier se présente sous la forme de deux éléments à assembler puis à ouvrir avant de fixer le collier. Ceci a pour conséquence d'augmenter le temps d'installation.

Il est également connu par le brevet DE 1 998338, un collier de fixation sans vis. Ce collier est formé de deux demi-colliers assemblés en pliant la languette reliant les deux demi-colliers et en insérant une languette saillante dans un trou prévu à cet effet. La languette saillante est ensuite déformée par torsion de façon à verrouiller les deux demi-colliers. Cependant, ce dispositif nécessite un outil pour tordre la languette saillante et donc augmente le temps d'installation. En cas de démontage et remontage des deux demi-colliers, l'utilisateur est obligé de tordre de nouveau la languette risquant de rompre cette dernière rendant le collier inutilisable. De plus, la languette saillante est orientée vers l'extérieur et risque ainsi de blesser quelqu'un.

Le brevet EP 1 397 598 enseigne un collier de fixation sans vis, cependant le moyen de fixation de ce collier est à clipsage et ne permet pas une fixation du collier dans un support plein. Il ne permet pas non plus d'utiliser les pattes de fixation classique munie d'un pas de vis.

Le brevet NL 1 015 775 enseigne un collier de fixation formé de deux demi-colliers cependant ce collier ne comporte pas d'entretoise. Lorsque l'utilisateur veut éloigner le collier du support de fixation il est obligé d'ajouter à ce collier une entretoise supplémentaire.

La présente invention a pour but de pallier certains inconvénients de l'art antérieur en proposant un collier de fixation sans vis à montage rapide en une seule pièce et déjà en position permettant une utilisation sans nécessiter d'opérations préalables.

Ce but est atteint par un collier de fixation pour tuyauterie ou analogue selon la revendication 1.

Selon une autre particularité, le collier de fixation est muni d'une entretoise en forme de U comportant des parois latérales avec un bossage orienté vers l'extérieur qui rigidifie les parois latérales, ces parois latérales se prolongeant par une portion de surface cylindrique qui contribue à former un axe

Selon une autre particularité l'entretoise, du collier de fixation, comprend un moyen de fixation à un support fixe, possédant au moins une portion de filetage, positionné à distance des formes concaves des demi-colliers.

Selon une autre particularité, un premier moyen de fixation est formé par au moins une partie d'un bord de l'ouverture et un second moyen de fixation est formé par au moins un ergot sur une face de la languette, ledit ergot étant destiné à être encliqueté dans l'ouverture sous le premier moyen de fixation pour verrouiller les deux demi-colliers.

Selon une autre particularité, la languette présente une pliure élastique en forme de V et l'ergot est formé sur la branche du V non reliée au demi collier.

Selon une autre particularité, un premier moyen de fixation est formé par un tenon longitudinal sur un bord de l'ouverture et un second moyen de fixation est formé par au moins une ouverture dans la languette, ladite ouverture étant destinée à être insérée sur le tenon pour verrouiller les deux demi-colliers.

Selon une autre particularité la languette présente une pliure élastique en forme de V et l'ouverture est formée dans la branche du V non reliée au demi-collier

Selon une autre particularité, un demi-collier comporte au moins un bossage sur chaque côté du demi-collier le reliant avec la patte de fixation, les bossages étant disposés en vis à vis.

Selon une autre particularité, un jonc de renfort est formé par emboutissage sur la face extérieure d'au moins un des demi-colliers, créant une rainure correspondante sur la face intérieure de ce demi-collier.

Selon une autre particularité, un bossage est formé par emboutissage sur l'extérieur de chacune des parois latérales de l'entretoise créant une cannelure correspondante sur leur face intérieure.

Selon une autre particularité, le moyen de fixation à un support fixe comporte au moins un filet sur au moins une partie de la circonférence d'un trou formé sur l'entretoise.

Selon une autre particularité, le moyen de fixation à un support fixe comporte un écrou serti dans l'entretoise.

Selon une autre particularité, un joint est agencé sur la face intérieure d'au moins un demi-collier.

D'autres particularités et avantages de la présente invention apparaîtront plus clairement à la lecture de la description ci-après, faite en référence aux dessins annexés, dans lesquels :
- la figure 1 représente une vue en perspective d'un mode de réalisation d'un collier selon l'invention en position ouverte.
- la figure 2 représente différentes étapes de montage d'une tuyauterie ou analogue sur un collier selon un exemple de réalisation de l'invention.
- la figure 3 représente différentes variantes de réalisations des moyens de fixation d'un collier selon l'invention.
- la figure 4 représente différentes étapes de montage d'une tuyauterie ou analogue sur un collier selon un autre exemple de réalisation de l'invention.
- la figure 5 représente une variante de réalisations des moyens de fixation d'un collier selon l'invention.

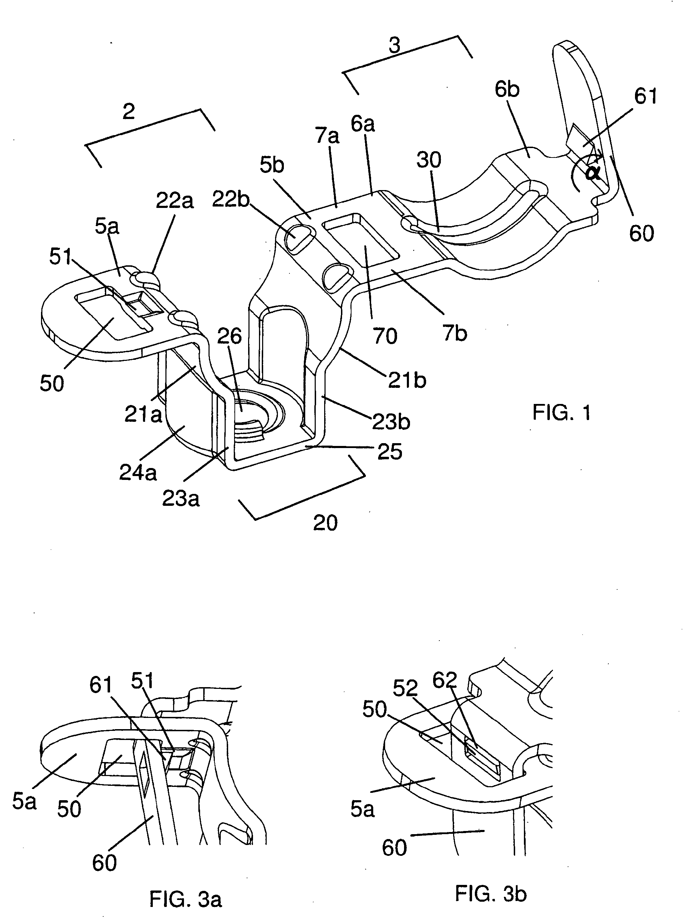

Un collier (1), comme représenté sur la figure 1, est constitué d'une bande, par exemple métallique, formant deux demi-colliers (2, 3) reliés de façon solidaire chacun par une de leurs extrémités formant une patte (5b, 6a). Ces deux demi-colliers (2, 3) complémentaires sont destinés à coopérer ensemble pour serrer et entourer la tuyauterie ou analogue à maintenir. Ces deux demi-colliers (2, 3) une fois assemblés forment un logement partiellement tubulaire, par exemple, sensiblement cylindrique, destiné à contenir un objet à fixer, par exemple, une portion d'un tuyau. Chaque demi-collier se prolonge vers l'extérieur par des pattes (5a, 5b, 6a, 6b).

Un tel collier (1) peut, par exemple et de façon non limitative, être réalisé par découpe, emboutissage et pliage d'une bande métallique ou d'un alliage métallique comme par exemple un acier bichromaté. Cependant, tous matériaux ayant des propriétés physiques compatibles avec la nature de l'invention peuvent être utilisés pour réaliser le collier (1).

Le collier (1) comprend un premier demi-collier (2) dit inférieur qui est destiné à être fixé sur un support sur lequel on souhaite faire passer la tuyauterie ou analogue comme par exemple un mur.

De façon à écarter le collier (1) du support de fixation, le demi-collier (2) inférieur comporte une entretoise (20), sensiblement en forme de U, par l'intermédiaire de laquelle il peut être fixé audit support au moyen par exemple d'une patte à vis traversant cette entretoise. L'entretoise (20) est située au milieu du demi-collier (2) inférieur qu'elle sépare en deux parties (21a, 21b) en forme de quart de cercle symétriques. Vue de profil, l'entretoise (20) définie une portion de forme sensiblement rectangulaire dépassant du demi-collier (2) inférieur. L'entretoise (20) forme une surface d'appui (25) destinée à être plaquée contre le support de fixation. Les parois latérales (23a, 23b) de l'entretoise (20) possèdent un bossage (24a, 24b) sur leur partie extérieure créant, sur leur partie intérieur, une cannelure correspondante. De façon avantageuse, ces cannelures pourront, par exemple, permettre de laisser passer la tête d'une vis et/ou d'un outil. Les bossages (24a, 24b) permettent de façon avantageuse de renforcer et rigidifier la pièce, évitant ainsi les risques de déformation. Les parois latérales (23a, 23b), de l'entretoise (20), se prolongent par au moins une surface cylindrique qui contribue à former un axe cylindrique.

Un autre effet technique avantageux de ces bossages (24a, 24b) est l'augmentation de la surface d'appuis (25) assurant, entre autre, une meilleure stabilité du collier.

De façon avantageuse, les parois latérales (23a, 23b) pourront être légèrement inclinées facilitant ainsi l'emboitement des colliers (1) pour par exemple leur rangement ou pour gagner de la place lors de leur conditionnement.

La surface d'appuis (25) de l'entretoise (20) possède un moyen de fixation au support sur lequel on souhaite faire passer la tuyauterie comme par exemple un mur. Le moyen de fixation à un support, de l'entretoise (20), est positionné à distance des formes concaves des demi-colliers, évitant ainsi que l'élément fileté, reliant le collier au support via ledit moyen de fixation, n'entre en contact avec le tube ou tout autre objet fixé dans le collier (1). Ledit moyen de fixation comprend un trou (26) sensiblement circulaire situé par exemple au centre de la surface d'appui (25) destiné au passage d'un élément de fixation comme par exemple une vis ou une patte à vis. Afin de coopérer avec le filetage de l'élément de fixation, le trou (26) peut, par exemple, être taraudé. Dans le cas de bande métallique fine, le taraudage du trou (26) peut être directement obtenu par emboutissage en déformant le pourtour dudit trou (26) de façon à former au moins une portion de filetage. Selon un autre mode de réalisation un ou plusieurs filets sensiblement hélicoïdaux sont ajoutés sur au moins une partie de la circonférence du trou (26) formé sur l'entretoise (20). Dans une autre variante de réalisation, un écrou peut être fixé sur la face opposée de la surface d'appuis (25) par exemple par soudage ou sertissage.

A proximité de la jonction entre chaque portion (21 a, 21 b) en forme de quart de cercle et des pattes (5a, 5b) du demi-collier (2) inférieur par exemple, sur chaque partie de la portion arrondie reliant les pattes (5a, 5b) aux parties (21 a, 21b) en forme de quart de cercle, est formé au moins un bossage (24a, 24b). La distance séparant deux bossages (24a, 24b) disposés en vis-à-vis, chacun à proximité d'une extrémité de la portion en quart de cercle (21) est inférieure au diamètre du tuyau à fixer, de manière à pouvoir maintenir le tuyau dans le demi-collier (2) inférieur pendant que l'utilisateur rabat le demi-collier (3) supérieur sur le demi-collier (2) inférieur pour serrer le tuyau contre les parties (21 a, 21 b). Chacun des bossages (24a, 24b) peut avoir la forme d'une bosse comme présentée sur la figure 1 ou bien être formé par un bourrelet saillant qui longe la jonction entre la patte (5a, 5b) et la partie (21 a, 21b) en forme de quart de cercle sur toute sa largeur.

Le collier (1) comprend un second demi-collier (3) dit supérieur de forme sensiblement semi-cylindrique. De façon avantageuse, la face extérieure du demi-collier (3) supérieur peut être surmontée longitudinalement et sensiblement au milieu d'un jonc de renfort (31) constitué d'une nervure de rigidité. Ce jonc de renfort (31) est formé, par exemple et de façon non limitative, par emboutissage. Une rainure correspondante à la nervure de rigidité est créée sur la face intérieure du demi-collier (3) supérieur.

Un tel jonc de renfort (31) peut également être réalisé sur les portions en forme de quart de cercle (21 a, 21 b) du demi-collier (2) inférieur.

Les deux demi-colliers (2, 3) sont reliés de façon solidaire par l'intermédiaire d'au moins une languette (7) reliant une patte (5b) du demi-collier (2) inférieur à une patte (6a) du demi-collier (3) supérieur). La languette (7) a une largeur inférieure à la largueur des pattes (5, 6).

De façon avantageuse, les deux demi-colliers (2, 3) sont reliés par l'intermédiaire d'au moins deux languettes (7a, 7b) limitant ainsi les problèmes de torsions au niveau de la languette (7). Chaque languette (7a, 7b) a une largeur inférieure à la demi-largeur des pattes de sorte qu'au moins une ouverture (70) sépare les languettes.

Le demi-collier (3) supérieur s'étend vers l'extérieur pour former une première patte (6) se prolongeant par une languette (60) élastique saillante de largeur inférieure à celle de ladite patte (6). La languette (60) élastique présente une pliure de sorte que la languette (60) forme un angle α sensiblement droit par rapport la direction longitudinale du collier (1). De façon avantageuse, l'angle α est légèrement inférieur à 90° de façon à faciliter le verrouillage des deux demi-colliers (2,3).

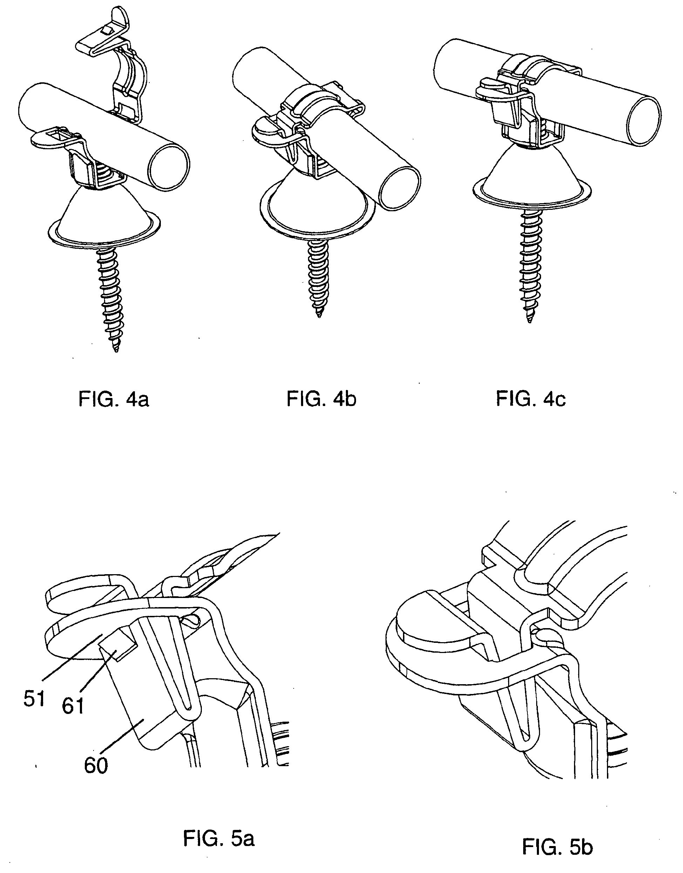

Suivant un mode de réalisation différent, illustré par exemple figure 4, la languette (60) présente une seconde pliure élastique en forme de V se prolongeant par une portion parallèle à la direction longitudinale du collier.

La languette (60) élastique saillante comporte un premier moyen de fixation.

Le demi-collier (2) inférieur s'étend vers l'extérieur pour former une première patte (5). Sur la patte (5) est formée une ouverture (50) comportant un second moyen de fixation destiné à coopérer avec le premier moyen de fixation présent sur la languette (60) élastique. L'ouverture (50) est destinée à coopérer avec la languette (60) pour participer au verrouillage du collier (1) de fixation. De ce fait, la forme et les dimensions de l'ouverture sont telles qu'elles permettent l'insertion et la déformation de la languette (60).

Selon un premier mode de réalisation, illustré par la figure 3a, le moyen de fixation de l'ouverture (50) est formé par un bord de ladite ouverture (50). De façon avantageuse, un bossage peut être réalisé sur ce bord de façon à renforcer la partie en contact avec l'ergot (61).

Le moyen de fixation de la languette (60) est constitué par au moins un ergot (61) en saillie sur la face interne de la languette (60) permettant son encliquetage dans l'ouverture (50). Cet ergot (61) peut être réalisé, par exemple et de façon non limitative, par découpe et emboutissage d'une partie de la languette (60).

Selon une autre variante de réalisation, illustré figure 3b, le moyen de fixation présent sur la languette (60) est un élément femelle formé par une ouverture (62) dans ladite languette (60). L'ouverture (62) peut, par exemple, avoir une forme rectangulaire. Le moyen de fixation est destiné à coopérer avec le moyen de fixation Dans ce mode de réalisation le moyen est un élément male formé par un tenon longitudinal dans l'ouverture (50). Le blocage du collier (1) est obtenu en insérant la languette (60) dans l'ouverture (50) puis le tenon (52) dans l'ouverture (62) éventuellement en déformant légèrement ladite languette (60). De façon avantageuse, la languette (60) peut présenter un angle α légèrement inférieur à 90° de sorte que l'ouverture (62) vienne s'insérer automatiquement autour du tenon (52).

Bien que non représenté, ce système de fermeture peut être réalisé sur la variante de languette (60) en forme de V. Dans cette variante de réalisation, l'ouverture (62) est formée dans la branche du V non reliée au demi-collier.

Les moyens de fixation, des deux demi-colliers, forment un système à encliquetage avec un élément orienté sensiblement parallèlement à un axe de fixation et dirigé vers le support. Ainsi, l'élément saillant n'est pas orienté vers l'extérieur et ne risque pas de blesser quelqu'un.

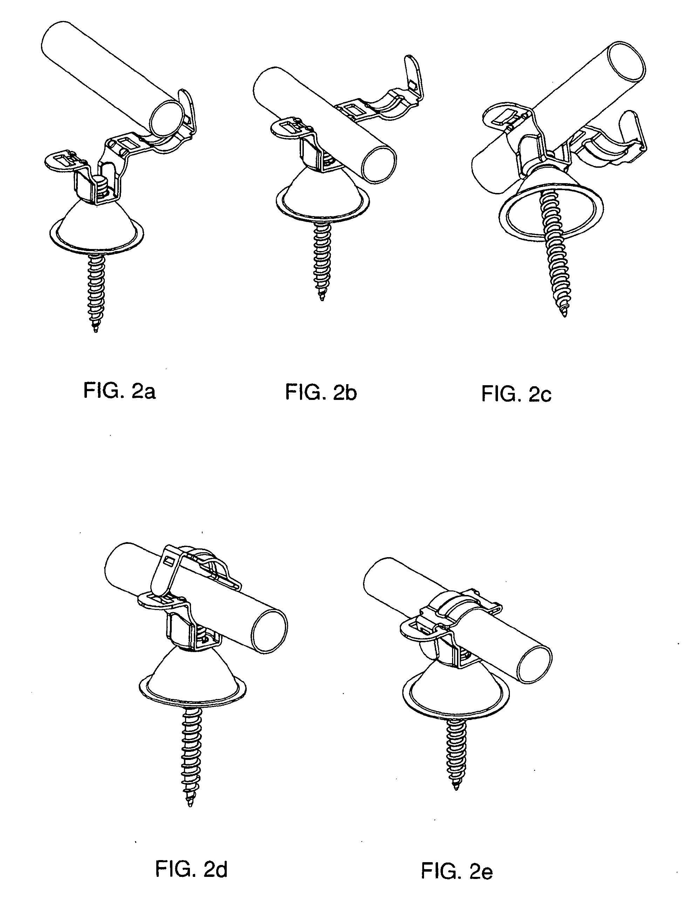

L'assemblage du collier (1) va à présent être décrit en référence aux figures 2a à 2e.

La figure 2a présente le collier (1) en position déplié et vissé, à titre d'exemple, sur une patte à vis elle-même déjà insérée dans une rosace conique.

Dans un premier temps (figures 2a à 2c), l'utilisateur vient positionner le tuyau ou autre tuyauterie en appui sur les parties (21 a, 21 b) en quart de cercle du demi-collier (2) inférieur. L'utilisateur peut s'aider par exemple des bossages (22) pour coincer le tuyau dans le demi-collier (2) inférieur.

La seconde étape, illustrée par la figure 2d, consiste à rabattre le demi-collier (3) supérieur sur le demi-collier inférieur en pliant les languettes (7) de façon à faire venir la patte (6) en face de la patte (5). L'opération de pliage des languettes (7) est facilitée par la faible largeur des languettes (7) réduisant ainsi leur rigidité.

La dernière étape (figure 2e) consiste à rabattre complètement le demi-collier (3) supérieur sur le demi-collier (2) inférieur en insérant la languette (60) élastique saillante dans l'ouverture (50).

Selon un premier mode de réalisation représenté à titre d'exemple figure 3a, le verrouillage du collier (1) est obtenu lorsque l'ergot (61) est encliqueté dans l'ouverture (50). Pour cela, l'utilisateur, après avoir inséré la languette (60) dans l'ouverture (50), plie légèrement la languette (60) de façon à bloquer l'ergot (61) sous le bord (51) de l'ouverture (50). De façon avantageuse, la languette (60) peut former un angle α sensiblement inférieur à 90°. De ce fait, lors de l'insertion de la languette (60) dans l'ouverture (50), l'ergot (61) va légèrement écarter ladite languette (60) puis cette dernière va automatiquement s'encliqueter dans l'ouverture (50) sans avoir à plier la languette (60).

Le verrouillage du collier (1) suivant un deuxième mode de réalisation illustré à titre d'exemple figure 3b, s'obtient de façon similaire. Le blocage est obtenu en présentant l'ouverture (62) en face du tenon (52) puis en pliant légèrement la languette (60) de façon à engager le tenon (52) dans l'ouverture (62). Comme dans le précédent mode de réalisation, le verrouillage du collier (1) peut être facilité par le pliage de la languette (60) suivant un angle α sensiblement inférieur à 90°.

Par la suite, l'utilisateur pourra déverrouiller le collier (1) en écartant la languette (60) de façon à libérer le moyen de fixation male du moyen de fixation femelle puis en relevant le demi-collier (3) supérieur de façon à pouvoir libérer la tuyauterie.

Les figures 4a à 4c présentent des étapes du verrouillage d'un collier de fixation suivant le mode de réalisation où la languette (60) présentant une seconde pliure en forme de V.

Comme précédemment, les languettes (7a, 7b) sont pliées de façon à rabattre le demi-collier supérieur sur le demi-collier inférieur. Lorsque l'utilisateur rabat complètement le demi-collier supérieur sur le demi-collier inférieur, l'ergot (61) vient s'encliqueter sous un bord (51) de l'ouverture (50). Cette opération est facilitée par la forme de la languette (60) qui agit comme un ressort qui vient rabattre l'ergot (61) sous le bord (51).

Le collier pourra être déverrouillé en pinçant la partie haute de la portion de languette (60) en forme de V de façon à désengager le moyen de fixation male du moyen de fixation femelle Le demi-collier supérieur pourra ainsi être relevé de façon à pouvoir libérer la tuyauterie.

Bien que l'invention ait été illustrée par un exemple d'un collier (1) simple, c'est-à-dire, celui dans lequel les demi-colliers (2, 3) une fois assemblés présentent un seul logement tubulaire et qui, de ce fait, ne peut fixer qu'un seul tuyau, on comprendra que l'invention puisse également être utilisée dans une configuration dans laquelle le collier (1) est au moins double, c'est-à-dire, celui dans laquelle les demi-colliers, une fois assemblés, présentent plusieurs logements tubulaires et qui, de ce fait, permettent de fixer au moins deux tuyaux.

De même, on peut imaginer un collier double permettant de fixer deux tuyaux, dans lequel chaque tuyau peut être verrouillé de façon individuelle. Dans cette configuration, le collier déplié présente 4 demi-colliers, deux demi-colliers inférieurs au centre et un demi-collier supérieur à chaque extrémité.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Collier (1) de fixation pour tuyauterie ou analogue, fabriqué par emboutissage découpe et pliage, formant deux demi-colliers (2, 3) complémentaires, chaque demi-collier (2, 3) formant au moins un logement de forme concave partiellement tubulaire prévu pour le passage de la tuyauterie ou analogue lorsque les deux demi-colliers (2, 3) sont assemblés, chaque demi-collier (2, 3) se prolongeant vers l'extérieur de chaque coté pour former au moins une patte (5, 6), une première patte (5) comprenant une ouverture (50) et un moyen de fixation et une seconde patte (6) étant prolongée par une languette (60) élastique de largeur inférieure à celle du collier (1) comprenant un second moyen de fixation, les deux demi-colliers (2, 3) étant solidaires par l'intermédiaire d'au moins une languette (7), ladite languette (7) étant destinée à être pliée en deux de façon à amener les deux concavités des demi-colliers (2, 3) en vis-à-vis, les moyens de fixation coopérant entre eux pour verrouiller le collier (1) sans vis lorsque la languette (60) est insérée dans l'ouverture (50),
le collier (1) étant **caractérisé en ce que** les moyens de fixation, des deux demi-colliers, forment un système à encliquetage avec un élément orienté sensiblement parallèlement à un axe de fixation et vers le support et **en ce qu'**un des demi-colliers comporte une entretoise (20) comprenant un moyen de fixation à un support fixe.

2. Collier (1) de fixation pour tuyauterie ou analogue suivant la revendication 1 **caractérisé en ce que** le collier (1) est muni d'une entretoise (20) en forme de U comportant des parois latérales (23a, 23b) avec un bossage (24a, 24b) orienté vers l'extérieur qui rigidifie les parois latérales (23a, 23b), ces parois latérales se prolongent par une portion de surface cylindrique qui contribue à former un axe cylindrique.

3. Collier (1) de fixation pour tuyauterie ou analogue suivant la revendication 1 ou 2 **caractérisé en ce que** le moyen de fixation à un support fixe, de l'entretoise (20), possède au moins une portion de filetage, positionné à distance des formes concaves des demi-colliers.

4. Collier (1) de fixation pour tuyauterie ou analogue suivant une des revendications 1 à 3 **caractérisé en ce qu'**un premier moyen de fixation est formé par au moins une partie (51) d'un bord de l'ouverture (50) et un second moyen de fixation est formé par au moins un ergot (61) sur une face de la languette (60), ledit ergot (61) étant destiné à être encliqueté dans l'ouverture (50) sous la partie (51) pour verrouiller les deux demi-colliers (2, 3).

5. Collier (1) de fixation pour tuyauterie ou analogue suivant la revendication 4 **caractérisé en ce que** la languette (60) présente une pliure élastique en forme de V et **en ce que** l'ergot (61) est formé sur la branche du V non reliée au demi-collier.

6. Collier (1) de fixation pour tuyauterie ou analogue suivant une des revendications 1 à 3 **caractérisé en ce qu'**un premier moyen de fixation est formé par un tenon (52) longitudinal sur un bord de l'ouverture (50) et un second moyen de fixation est formé par au moins une ouverture (62) dans la languette (60), ladite ouverture (62) étant destinée à être insérée sur le tenon (52) pour verrouiller les deux demi-colliers (2, 3).

7. Collier (1) de fixation pour tuyauterie ou analogue suivant une des revendications 6 **caractérisé en ce que** la languette (60) présente une pliure élastique en forme de V et **en ce que** l'ouverture (62) est formée dans la branche du V non reliée au demi-collier.

8. Collier (1) de fixation selon l'une des revendications 1 à 7, **caractérisé en ce qu'**un demi-collier (2) comporte au moins un bossage (22a, 22b) sur chaque côté du demi-collier (2) le reliant avec la patte de fixation (5a, 5b), les bossages (22a, 22b) étant disposés en vis à vis.

9. Collier de fixation (1) selon l'une des revendications 1 à8, **caractérisé en ce qu'**un jonc de renfort (30) est formé par emboutissage sur la face extérieure d'au moins un des demi-colliers (2, 3), créant une rainure correspondante sur la face intérieure de ce demi-collier.

10. Collier (1) de fixation selon l'une des revendications 1 à 9, **caractérisé en ce qu'**un bossage est formé par emboutissage sur l'extérieur de chacune des parois latérales (23a, 23b) de l'entretoise (20) créant une cannelure correspondante sur leur face intérieure.

11. Collier (1) de fixation selon l'une des revendications 1 à10, **caractérisé en ce que** le moyen de fixation à un support fixe comporte au moins un filet sur au moins une partie de la circonférence d'un trou (26) formé sur l'entretoise (20).

12. Collier (1) de fixation selon l'une des revendications 1 à 11, **caractérisé en ce que** le moyen de fixation à un support fixe comporte un écrou serti dans l'entretoise (20).

13. Collier (1) de fixation selon l'une des revendications 1 à 12, **caractérisé en ce qu'**au moins un joint est agencé sur la face intérieure d'au moins un demi-collier.

## Patentansprüche

1. Befestigungsschelle (1) für eine Rohrleitung oder dergleichen, die mittels Tiefziehens, Schneidens und Biegens hergestellt ist, die zwei komplementäre Halbschellen (2, 3) ausbildet, wobei jede Halbschelle (2, 3) mindestens eine konkav geformte teilweise rohrförmige Aufnahme ausbildet, die zum Hindurchpassieren der Rohrleitung oder dergleichen vorgesehen ist, wenn die beiden Halbschellen (2, 3) zusammengefügt sind, wobei sich jede Halbschelle (2, 3) auf jeder Seite nach außen hin verlängert, um mindestens eine Lasche (5, 6) auszubilden, wobei eine erste Lasche (5) eine Öffnung (50) und ein Befestigungsmittel aufweist und eine zweite Lasche (6) durch eine elastische Zunge (60) mit einer Breite, die kleiner als diejenige der Schelle (1) ist, verlängert ist, die ein zweites Befestigungsmittel aufweist, wobei die beiden Halbschellen (2, 3) mittels mindestens einer Zunge (7) fest miteinander verbunden sind, wobei die Zunge (7) vorgesehen ist, um in zwei Teile umgeklappt zu werden, um die beiden Konkavitäten der Halbschellen (2, 3) einander gegenüber anzuordnen, wobei die Befestigungsmittel zusammenwirken, um die Schelle (1) schraubenlos zu verriegeln, wenn die Zunge (60) in die Öffnung (50) eingesetzt ist,
wobei die Schelle (1) **dadurch gekennzeichnet ist, dass** die Befestigungsmittel der beiden Halbschellen mit einem Element, das im Wesentlichen parallel zu einer Befestigungsachse und in Richtung zu dem Träger ausgerichtet ist, ein Einrastsystem ausbilden, und dass eine der Halbschellen einen Abstandshalter (20) aufweist, der ein Mittel zur Befestigung an einem festen Träger aufweist.

2. Befestigungsschelle (1) für eine Rohrleitung oder dergleichen gemäß Anspruch 1, **dadurch gekennzeichnet, dass** die Schelle (1) mit einem U-förmigen Abstandshalter (20) versehen ist, der Seitenwände (23a, 23b) mit einer nach außen ausgerichteten Erhebung (24a, 24b) aufweist, die die Seitenwände (23a, 23b) versteift, wobei die Seitenwände durch einen zylinderförmigen Oberflächenabschnitt verlängert sind, der dazu beiträgt, eine zylinderförmige Achse auszubilden.

3. Befestigungsschelle (1) für eine Rohrleitung oder dergleichen gemäß Anspruch 1 oder 2, **dadurch gekennzeichnet, dass** das Mittel des Abstandshalters (20) zum Befestigen an einem festen Träger mindestens einen Gewindeabschnitt aufweist, der im Abstand zu den konkaven Formen der Halbschellen angeordnet ist.

4. Befestigungsschelle (1) für eine Rohrleitung oder dergleichen gemäß einem der Ansprüche 1 bis 3, **dadurch gekennzeichnet, dass** ein erstes Befestigungsmittel durch mindestens einen Abschnitt (51) eines Randes der Öffnung (50) ausgebildet ist und ein zweites Befestigungsmittel durch mindestens eine Nase (61) an einer Fläche der Zunge (60) ausgebildet ist, wobei die Nase (61) vorgesehen ist, um in der Öffnung (50) unter dem Abschnitt (51) einzurasten, um die beiden Halbschellen (2, 3) zu verriegeln.

5. Befestigungsschelle (1) für eine Rohrleitung oder dergleichen gemäß Anspruch 4, **dadurch gekennzeichnet, dass** die Zunge (60) eine elastische Krümmung in V-Form aufweist und die Nase (61) an dem Schenkel des V ausgebildet ist, der nicht mit der Halbschelle verbunden ist.

6. Befestigungsschelle (1) für eine Rohrleitung oder dergleichen gemäß einem der Ansprüche 1 bis 3, **dadurch gekennzeichnet, dass** ein erstes Befestigungsmittel durch einen Längszapfen (52) an einem Rand der Öffnung (50) ausgebildet ist und ein zweites Befestigungsmittel durch mindestens eine Öffnung (62) in der Zunge (60) ausgebildet ist, wobei die Öffnung (62) vorgesehen ist, um auf den Zapfen (52) gesetzt zu sein, um die beiden Halbschellen (2, 3) zu verriegeln.

7. Befestigungsschelle für eine Rohrleitung oder dergleichen gemäß Anspruch 6, **dadurch gekennzeichnet, dass** die Zunge (60) eine elastische Krümmung in V-Form aufweist und dass die Öffnung (62) in dem Schenkel des V ausgebildet ist, der nicht mit der Halbschelle verbunden ist.

8. Befestigungsschelle (1) gemäß einem der Ansprüche 1 bis 7, **dadurch gekennzeichnet, dass** eine Halbschelle (2) mindestens eine Erhebung (22a, 22b) auf jeder Seite der Halbschelle (2) aufweist, die diese mit der Befestigungslasche (5a, 5b) verbindet, wobei die Erhebungen (22a, 22b) einander gegenüber angeordnet sind.

9. Befestigungsschelle (1) gemäß einem der Ansprüche 1 bis 8, **dadurch gekennzeichnet, dass** eine verstärkungsrippe (30) durch Tiefziehen an der Außenseite von mindestens einer der Halbschellen (2, 3) ausgebildet ist, die eine korrespondierende Einkerbung an der Innenseite der Halbschelle ausbildet.

10. Befestigungsschelle (1) gemäß einem der Ansprüche 1 bis 9, **dadurch gekennzeichnet, dass** eine Erhebung durch Tiefziehen an der Außenseite von jeder der Seitenwände (23a, 23b) des Abstandshalters (20) ausgebildet ist, wodurch an ihrer Innenfläche eine korrespondierende Rille gebildet wird.

11. Befestigungsschelle (1) gemäß einem der Ansprüche 1 bis 10, **dadurch gekennzeichnet, dass** das Mittel zum Befestigen an einem festen Träger mindestens ein Gewinde an zumindest einem Abschnitt des Umfangs eines Lochs (26) aufweist, das an dem Abstandshalter (20) ausgebildet ist.

12. Befestigungsschelle (1) gemäß einem der Ansprüche 1 bis 11, **dadurch gekennzeichnet, dass** das Mittel zum Befestigen an einem festen Träger eine Einpressmutter in dem Abstandshalter (20) aufweist.

13. Befestigungsschelle (1) gemäß einem der Ansprüche 1 bis 12, **dadurch gekennzeichnet, dass** zumindest eine Dichtung an der Innenseite mindestens einer Halbschelle angeordnet ist.

## Claims

1. Fixing collar (1) for piping or the like, manufactured by stamping, cutting and folding, forming two complementary half-collars (2, 3), each half-collar (2, 3) forming at least one partially tubular housing which is concave in shape and designed for passage of the piping or the like when the two half-collars (2, 3) are assembled together, each half-collar (2, 3) being extended towards the exterior on each side to form at least one lug (5, 6), a first lug (5) comprising an opening (50) and a fixing means and a second lug (6) being extended by an elastic tongue (60) with a width which is less than that of the collar (1) comprising a second fixing means, the two half-collars (2, 3) being locked together through the intermediary of at least one tongue (7), said tongue (7) being designed to be folded in two so as to bring the two concavities of the half-collars (2, 3) together facing one another, the fixing means cooperating with one another to lock the collar (1) without a screw when the tongue (60) is inserted in the opening (50),
the collar (1) being **characterised in that** the fixing means of the two half-collars form an engagement system with an element oriented substantially parallel to an axis of fixture and towards the support and **in that** one of the half-collars has a spacing part (20) comprising a means for fixing to a fixed support.

2. Fixing collar (1) for piping or the like according to claim 1, **characterised in that** the collar (1) is provided with a U-shaped spacing part (20) having side walls (23a, 23b) with a boss (24a, 24b) oriented towards the exterior which stiffens the side walls (23a, 23b), these side walls being extended by a cylindrical surface portion which contributes to forming a cylindrical axis.

3. Fixing collar (1) for piping or the like according to claim 1 or 2, **characterised in that** the means for fixing to a fixed support of the spacing part (20) has at least one portion of thread, positioned a distance from the concavities of the half-collars.

4. Fixing collar (1) for piping or the like according to one of claims 1 to 3, **characterised in that** a first fixing means is formed by at least one part (51) of an edge of the opening (50) and a second fixing means is formed by at least one catch (61) on a face of the tongue (60), said catch (61) being designed to be engaged in the opening (50) under the part (51) to lock the two half-collars (2, 3) together.

5. Fixing collar (1) for piping or the like according to claim 4, **characterised in that** the tongue (60) exhibits an elastic fold in the shape of a V and **in that** the catch (61) is formed on the branch of the V not joined to the half-collar.

6. Fixing collar (1) for piping or the like according to one of claims 1 to 3, **characterised in that** a first fixing means is formed by a longitudinal protection (52) on an edge of the opening (50) and a second fixing means is formed by at least one opening (62) in the tongue (60), said opening (62) being intended to be fitted over the projection (52) to lock the two half-collars (2, 3) together.

7. Fixing collar (1) for piping or the like according to *claim 6,* **characterised in that** the tongue (60) exhibits an elastic fold in the shape of a V and **in that** the opening (62) is formed in the branch of the V not joined to the half-collar.

8. Fixing collar (1) according to one of claims 1 to 7, **characterised in that** one half-collar (2) has at least one boss (22a, 22b) on each side of the half-collar (2) joining it to the fixing lug (5a, 5b), the bosses (22a, 22b) being disposed facing one another.

9. Fixing collar (1) according to one of claims 1 to 8, **characterised in that** a reinforcement (30) is formed by stamping on the external face of at least one of the half-collars (2, 3), creating a corresponding groove on the internal face of this half-collar.

10. Fixing collar (1) according to one of claims 1 to 9, **characterised in that** a boss is formed by stamping on the exterior of each of the side walls (23a, 23b) of the spacing part (20), creating a corresponding channel on the interval face thereof.

11. Fixing collar (1) according to one of claims 1 to 10, **characterised in that** the means for fixing to a fixed support has at least one fillet on at least one part of the circumference of a hole (26) formed on the spacing part (20).

12. Fixing collar (1) according to one of claims 1 to 11, **characterised in that** the means for fixing to a fixed support has a nut crimped in the spacing part (20).

13. Fixing collar (1) according to one of claims 1 to 12, **characterised in that** at least one joint is arranged on the internal face of at least one half-collar.
